# EUROPÄISCHE PATENTSCHRIFT

(11) **EP 2 435 179 B1**
(45) Veröffentlichungstag und Bekanntmachung des Hinweises auf die Patenterteilung: **14.09.2016**
(21) Anmeldenummer: 10720917.3
(22) Anmeldetag: 20.05.2010
(51) Int. Cl.: B01J 20/10, C12N 15/10, B01J 20/30

(54) **VERFAHREN ZUR REAKTIVIERUNG VON SILIKAOBERFLÄCHEN ZUR ISOLIERUNG VON NUKLEINSÄUREN**
PROCESS FOR REACTIVATING SILICA SURFACES FOR THE ISOLATION OF NUCLEIC ACIDS
PROCÉDÉ DE RÉACTIVATION DE SURFACES EN SILICE POUR ISOLER DES ACIDES NUCLÉIQUES

(30) Priorität: 25.05.2009 DE 102009022512
(43) Veröffentlichungstag der Anmeldung: 04.04.2012
(73) Patentinhaber: Qiagen GmbH, 40724 Hilden (DE)
(72) Erfinder: SPRENGER-HAUSSELS, Markus, 40822 Mettmann (DE)
(74) Vertreter: Gille Hrabal
(86) Internationale Anmeldenummer: PCT/EP2010/056937
(87) Internationale Veröffentlichungsnummer: WO 2010/136372

(56) Entgegenhaltungen:
- EP-A1- 1 529 840
- EP-A1- 1 690 938
- ESSER KARL-HEINZ ET AL: "Nucleic acid-free matrix: Regeneration of DNA binding columns" BIOTECHNIQUES, Bd. 39, Nr. 2, August 2005 (2005-08), Seiten 270-271, XP002591691 ISSN: 0736-6205
- ESSER K -H ET AL: "maxXbond: First regeneration system for DNA binding silica matrices" NATURE METHODS 200601 GB LNKD- DOI:10.1038/NMETH845, Bd. 3, Nr. 1, Januar 2006 (2006-01), Seiten I-II, XP002591692
- ESSER KARL-HEINZ ET AL: "maxXbond AX: Optimized regeneration kit for silica-based anion exchange resins" BIOTECHNIQUES, Bd. 40, Nr. 3, März 2006 (2006-03), Seiten 398-399, XP002591693 ISSN: 0736-6205

## Beschreibung

### Gebiet der Erfindung

Die vorliegende Erfindung betrifft ein Verfahren sowie eine Verwendung zur Reaktivierung von Silikaoberflächen wie beispielsweise Silikamembranen, Silikapartikel oder Säulen mit Silikaschüttungen. Die Vorrichtung sowie die Verwendung sind beispielsweise für Anwendungszwecke in der Biochemie, Molekularblologie, Molekulargenetik, Mikrobiologie, medizinischen Diagnostik, Lebensmitteldiagnostik oder Forensik geeignet.

### Technischer Hintergrund

Silikaoberflächen sind z.B. im Gebiet der Biochemie, Molekularbiologie, Molekulargenetik, Mikrobiologie, medizinischen Diagnostik, Lebensmitteldiagnostik oder Forensik weit verbreitet und werden üblicherweise zur Separierung, Isolierung und Reinigung von Biomolekülen eingesetzt. Eine häufig eingesetzte Methode ist z.B. der Einsatz von Silikamembranen bei der Isolierung von Nukleinsäuren wie beispielsweise DNA oder RNA.

Hierzu wird die in einer Probe enthaltene, zu isolierende DNA und/oder RNA in Gegenwart z.B. eines sog. "chaotropen" Reagens an die Silikamembran gebunden. Die übrigen Bestandteile der Probe können anschließend durch Spülen und Waschen entfernt werden. Anschließend wird die DNA bzw. RNA freigesetzt und untersucht.

Der Hauptnachteil ist, dass Silika-Säulen nur einmal verwendet werden können, da nach der Elution erhebliche Menge der DNA auf den Silika-Säulen angebracht ist und die Bindungskapazität der Silika-Säulen somit reduziert werden.

Ein innovatives Regenerationssystem-*maxXbond* für die Verwendung der Nukleinsäurebindenden Säule wurde berichtet (Dr. Esser et al. BioTechniques 2005, Vol. 39, No. 2, 270-271 und Dr. Esser *et al.* Nature Methods 2006, 3) wobei die regenerierten Säulen 100% frei von Nukleinsäure sind. Infolgedessen wurde ein optimiertes Regeneration-Kit für Anionenaustauscherharz, das auf Silica basiert, entwickelt (Dr. Esser et al. BioTechniques 2006, Vol. 40, No. 3, 398-399).

Im Zug internen Untersuchungen der Anmelderin ist nun aufgefallen, dass bei einigen Sillkamatrices, insbesondere kommerziell vertriebenen Silikamembranen das Problem auftritt, dass bei einzelnen Membranen manchmal die Fähigkeit, Nukleinsäuren zu binden mit der (Lager-)-Zeit abnimmt. Dies gilt besonders wenn diese bei Raum- oder höheren Temperaturen gelagert werden. Dieses Problem kann zwar durch Lagerung bei 2-8°C so stark verzögert werden, dass eine Beeinträchtigung der Qualität bis zum Verfallsdatum des Produkts weitestgehend ausgeschlossen werden kann, ist aber dennoch als nachteilig einzustufen.

### Aufgabe der vorliegenden Erfindung

Der vorliegenden Erfindung liegt die Aufgabe zugrunde, die beschriebenen, sich aus dem Stand der Technik ergebenden Nachteile zumindest weitgehend zu überwinden und insbesondere für eine weite Spanne von Anwendungen eine Vorrichtung sowie eine Verwendung zu schaffen, durch die die Aktivität von Silikaoberflächen erhöht, insbesondere wiederhergestellt werden kann.

Die Aufgabe wird durch ein Verfahren gemäß Anspruch 1 der vorliegenden Erfindung gelöst. Demgemäß wird ein Verfahren zur Erhöhung der Aktivität von Silikaoberflächen, insbesondere von Silikamatrices wie beispielsweise Silikamembranen oder Silikapartikeln durch Behandeln mit wässriger Lösung und/oder Wasser vorgeschlagen.

Die Aufgabe wird ebenfalls durch eine Verwendung gemäß Anspruch 2 der vorliegenden Erfindung gelöst. Demgemäß wird die Verwendung von Wasser zur Erhöhung der Aktivität von Silikaoberflächen, insbesondere von Silikamatrices wie beispielsweise Silikamembranen oder Silikapartikeln vorgeschlagen.

Unter dem Term "wässriger Lösung" wird insbesondere eine Lösung verstanden, die zu ≥ 99,5 Gew-% aus Wasser besteht.

Unter dem Term "Aktivität" wird insbesondere die Fähigkeit zur Anbindung und/oder Immobilisierung von Nukleinsäuren verstanden.

Unter dem Term "Nukleinsäure" im Sinne der vorliegenden Erfindung wird insbesondere - aber nicht darauf beschränkt - natürliche, vorzugsweise lineare, verzweigte oder zirkuläre Nukleinsäuren wie RNA, insbesondere mRNA, einzelsträngige und doppelsträngige virale RNA, siRNA, miRNA, snRNA, snoRNA, scaRNA, tRNA, hnRNA oder Ribozyme genomische, bakterielle oder virale DNA (einzelsträngig und doppelsträngig), chromosomale und episomale DNA, frei zirkulierende Nukleinsäure und dergleichen, synthetische oder modifizierte Nukleinsäuren, beispielsweise Oligonukleotide, insbesondere für die PCR verwendete Primer, Sonden oder Standards, mit Digoxigenin, Biotin oder Fluoreszensfarbstoffen markierte Nukleinsäuren oder sogenannte PNAs (*ₙpeptide nucleic acids"*) verstanden.

Unter dem Term "immobilisierung" im Sinne der vorliegenden Erfindung wird insbesondere - aber nicht darauf beschränkt - eine reversible Immobilisierung an eine geeignete feste Phase verstanden.

Unter dem Term Erhöhung" wird insbesondere und gemäß einer bevorzugten Ausführungsform der Erfindung eine Re-Aktivierung verstanden.

Unter dem Term "Silikaoberflächen" werden insbesondere - aber nicht darauf beschränkt - Silikamatrices wie beispielsweise Silikamembranen, Silikapartikel als lose Schüttung, mit Silika beschichtete magnetische, paramagnetische, ferromagnetische oder superparamagnetische Partikel oder Silikafasern verstanden.

Unter dem Term "Silikamembranen" werden insbesondere - aber nicht darauf beschränkt - Membranen mit eingearbeiteten Silikafasern, eingearbeitetem Silikagel, membranintegriertem oder membranassoziertem Silika in jeglicher anderen Form verstanden.

Ein derartiges Verfahren bietet für eine weite Spanne von Anwendungen innerhalb der vorliegenden Erfindungen mindestens einen der folgenden Vorteile:
- Die Erhöhung der Aktivität, insbesondere die Reaktivierung der Matrix (z.B. Membran) verläuft mittels eines einfachen Schritts unter sehr milden Bedingungen.
- Bei den meisten Anwendungen innerhalb der vorliegenden Erfindung ist die Reaktivierung sogar so vollständig, dass auf eine Lagerung bei kalten Temperaturen verzichtet werden kann.
- Es kann durch den Reaktivierungsschritt eine gleichbleibende Qualität und Funktion der Matrices (insbesondere in Form von Säulen) gewährleistet werden.
- Die Reproduzierbarkeit in der Anwendung steigt dadurch signifikant.

Es sei darauf hingewiesen, dass das erfindungsgemäße Verfahren umso überraschender ist, da es insbesondere bei solchen Silikamatrices benutzt werden kann, die zur Anbindung/Immobilisierung von Nukleinsäuren dienen. Die Bedingungen, bei denen die Anbindung/Immobilisierung erfolgt, sind normalerweise so, dass
- ein chaotropes Reagenz eingesetzt wird, dessen Wirkung unter anderem darauf beruht, dass es die Hydrathülle um die Nukleinsäuren zerstört; sowie
- dass die Immobilisierung unter dehydratisierenden Bedingungen (z.B. mittels Alkohol als Lösemittel) erfolgt.

Somit wird bei der Immobilisierung das Wasser zwar nicht vollständig ausgeschlossen, aber die Hydrathülle um die Nukleinsäure zumindest weitgehend entfernt. Umso überraschender ist es, dass die Wiederherstellung bzw. Erhöhung der Aktivität (= Immobilisierungsfähigkeit) der Silikamatrices unter den einfachen erfindungsgemäßen Umständen erfolgt.

Die Behandlung mit Wasser bzw. einer wässrigen Lösung findet vorzugsweise für ≥5 Minuten, bevorzugt für ≥10 Minuten, besonders bevorzugt bei ≥15 Minuten, ganz besonders bevorzugt ≥30 Minuten statt. Prinzipiell ist die Dauer der Behandlung nicht nach oben begrenzt, jedoch hat sich bei den meisten Anwendungen herausgestellt, dass eine Behandlung von länger als 60 Minuten (oftmals auch schon ab 45 Minuten) keine wesentliche Aktivitätserhöhung mehr hervorruft. Somit liegt die bevorzugte Behandlungsdauer zwischen15 bis 60 Minuten, besonders bevorzugt zwischen 30 bis 45 Minuten

Grundsätzlich ist es bevorzugt, dass die Behandlung mit Wasser bzw. einer wässrigen Lösung im zeitlich geringen Abstand, besonders bevorzugt unmittelbar (nur unterbrochen durch ggf. Waschschritte etc.) vor dem geplanten Einsatz der Silikamatrix erfolgt, da so der erzielte Effekt am höchsten ist.

Die Behandlung mit Wasser bzw. einer wässrigen Lösung findet weiterhin bevorzugt bei einer Temperatur von 0°C, 1°C, 2°C, 3°C, 4°C, 5°C, besonders bevorzugt bei ≥5°C statt. Prinzipiell ist die Temperatur der Behandlung nicht nach oben begrenzt, jedoch hat sich bei den meisten Anwendungen herausgestellt, dass eine Behandlung bei einer Temperatur bis ≥45°C am einfachsten zu handhaben ist, wobei der Temperaturbereich von ≥20°C bis ≤30°C bevorzugt ist. Ideal sind Temperaturen von 21, 22, 23, 24, 25, 26, 27, 28 oder 29°C, wobei eine Behandlung bei Raumtemperatur bevorzugt wird.

Eine zur erfindungsgemäßen Behandlung eingesetzte wässrige Lösung kann zudem eine oder mehrere Komponenten enthalten, ausgewählt aus der Gruppe von
- Puffersubstanzen, insbesondere - aber nicht darauf beschränkt - Tris, Tris/HCl, HEPES, MOPS, Natriumacetatpuffer, Phosphatpuffer, Ammoniumacetatpuffer
- Salzen, wie beispielsweise aber nicht ausschließlich Halogenide, Chloride, insbesondere NaCl, KCl, MgCl₂, CaCl₂, Mn Cl₂, Ammoniumacetat, Magnesiumacetat und andere Acetate, Sulfate, Sulfite, Phosphate, Phosphite, Carbonate, Nitrate, Nitrite
- Stabilisatoren, insbesondere Chelatoren wie beispielsweise EDTA, EGTA, NTA, EDDHA, DTPA, HEEDTA
- Konservierungsmittel, insbesondere aber nicht beschränkt auf Natriumazid, ProClin, Sorbinsäure, Sorbate, Benzoate
- Detergenzien, wie beispielsweise aber nicht ausschließlich Triton, SDS, Tween, Brij oder anderen
sowie Mischungen daraus.

Überraschenderweise hat sich jedoch herausgestellt, dass der Zusatz von größeren Mengen an chaotropen Reagenzien die Aktivierung reduziert. Somit weist die wässrige Lösung vorzugsweise keine oder nur geringe Konzentrationen (bevorzugt ≤100 mM, besonders bevorzugt ≤10mM, ganz besonders bevorzugt ≤1 mM) an chaotropen Reagenzien auf.

Weiterhin weist die zur erfindungsgemäßen Behandlung verwendete wässrige Lösung einen pH-Wert von 1, 2, 3, 4, 5, 6, 7, 8, 9 oder10 auf. Vorzugsweise hat die wässrige Lösung einen pH-Wert von ≥2 bis ≤9,5, bevorzugt von ≥4 bis ≤9, besonders bevorzugt, von ≥5 bis ≤8,5, ganz bevorzugt von ≥6 bis ≤8, und ist am meisten bevorzugt im wesentlichen neutral.

Die vorgenannten sowie die beanspruchten und in den Ausführungsbeispielen beschriebenen erfindungsgemäß zu verwendenden Komponenten unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Figuren und Beispiele, in denen - beispielhaft - mehrere Ausführungsformen sowie Einsatzmöglichkeiten der vorliegenden Erfindung dargestellt sind.
- Fig. 1: zeigt die Aktivität verschiedener Silikamatrices nach einer dreiwöchigen Lagerung bei verschiedenen Temperaturen und einer nachfolgenden erfindungsgemäßen Behandlung mit Wasser.
- Fig. 2: zeigt die Aktivität verschiedener Silikamatrices nach einer dreiwöchigen Lagerung und einer nachfolgendenerfindungsgemäßen Behandlung mit unterschiedlichen wässrigen Lösungen.

Beispiel 1: Bestimmung der Aktivität von Silikamatrices nach einer dreiwöchigen Lagerung bei verschiedenen Temperaturen und einer nachfolgenden erfindungsgemäßer Behandlung mit Wasser.

### Dabei wurde wie folgt vorgegangen:

Mehrere QIAamp MinElute Säulen (der Firma QIAGEN) wurden für 3 Wochen bei 45°C sowie Referenzsäulen (der gleichen Lot.-Nummer) parallel bei 5°C gelagert.

Die Hälfte der bei 45°C gelagerten Säulen wurden jeweils vor der Verwendung für 30 min mit Wasser bei Raumtemperatur vorinkubiert.

Anschließend wurde die Aktivität der Säulen gemessen.

Hierzu wurde als Probe mit Hepatitis B Virus [10e4 c/ml HBV] versetztes Humanplasma mittels des "Vakuum"- (QIAamp MinElute Virus Vakuum Handbook, 3.

Auflage, März 2007) oder des "Spin" Protokolls (QIAamp MinElute Virus Spin Handbook, 3. Auflage, Februar 2007) aufgearbeitet/aufgereinigt.

Die gereinigte Nukleinsäure (doppelsträngige, zirkuläre DNA) wurde mittels einer HBV spezifischen Realtime PCR quantifiziert. Die Menge an isolierter HBV DNA kann als Maß für die Bindeaktivität der Säule herangezogen werden. Niedrige Ct-Werte (Treshold Cycle; PCR Zyklus in dem die Nukleinsäure erstmals nachweisbar ist) belegen eine höhere Bindeaktivität, höhere Ct-Werte eine reduzierte Bindekapazität.

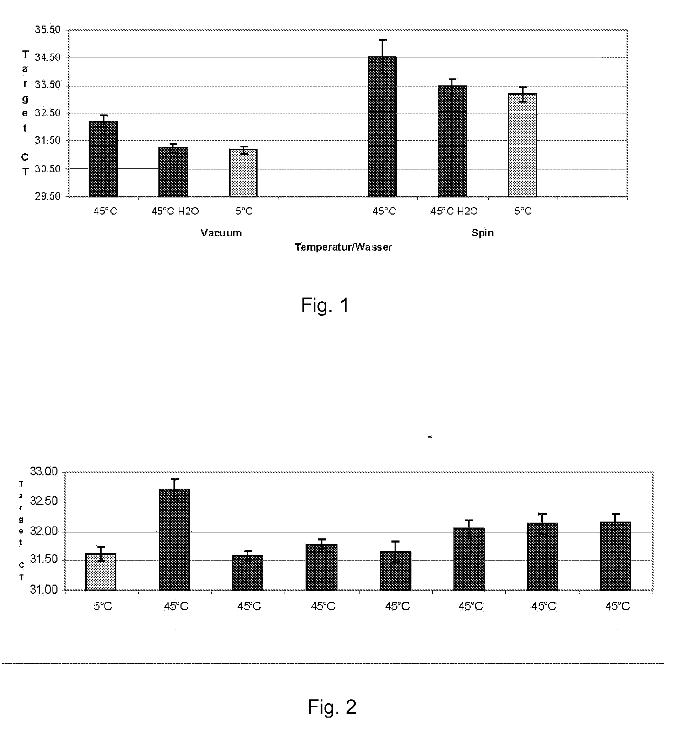

Die Aktivitätsmessung ist in Fig. 1 dargestellt. Dabei ist jeweils die Aktivität der bei 45°C gelagerten Säule, die Aktivität der bei 45°C gelagerten und nachfolgend erfindungsgemäß mit Wasser behandelten Säule (45°C, H₂O) sowie als Kontrolle die Aktivität der bei 5°C gelagerten Säule gezeigt.

Als Ergebnis ist festzustellen dass die Alterung der bei 45°C gelagerten Säulen im Vergleich zu den bei 5°C gelagerten Säulen (bei denen die Aktivität nicht abnimmt) nach 3 Wochen zu etwa 1 Ct Verzögerung (d.h. zu etwa minus 50% der Bindekapazität) führt.

Die Vorbehandlung der bei 45°C gelagerten Säulen (45 C /H₂O) zeigt hingegen, dass die Alterung überraschenderweise vollständig aufgehoben werden kann. Bei 45°C gelagerte Säulen, die vor Gebrauch erfindungsgemäß behandelt werden, zeigen somit die gleiche Performance wie Säulen, die kühl bzw. bei 5°C gelagert wurden.

Beispiel 2: Bestimmung der Aktivität von Silikamatrices nach einer dreiwöchigen Lagerung und einer nachfolgenden erfindungsgemäßer Behandlung mit unterschiedlichen wässrigen Lösungen.

Dabei wurden - entsprechend dem Beispiel 1 - mehrere QIAamp MinElute Säulen für 3 Wochen bei 45°C sowie Referenzsäulen (der gleichen Lot.-Nummer) parallel bei 5°C gelagert.

Vor der Messung der Aktivität wurden mehrere Säulen jeweils mit folgenden Lösungen für 30 min bei Raumtemperatur inkubiert:

| | |
|---|---|
| Lösung 1 | 0,04% Natriumazid in Wasser, pH 6 |
| Lösung 2 | 10mM Tris/HCl (pH 8,5) in Wasser |
| Lösung 3 | 10mM Tris/HCl (pH 9,0), 0.5 mM EDTA in Wasser |
| Lösung 4 | 10mM Tris/HCl (pH 8,0), 10 mM KCl, 2mM EDTA, 2% Triton x-100, 14,5 mM MgCl₂ in Wasser |
| Lösung 5 | 50 mM NaOAc, pH 5,1, 5M GITC, 0,1 M Xylitol, 3% Kresolrot in Wasser |
| Lösung 6 | 50 mM MOPS, pH 7,0, 750 mM NaCl, 0,15 % Triton x-100, 15% Isopropanol |

Anschließend wurde die Bindeaktivität - wie unter Beispiel 1 beschrieben -gemäß des Vakuum-Protokolls mit HBV versetztem Humanplasma [10e4 c/ml HBV] aufgereinigt und die gereinigte Nukleinsäure (doppelsträngige, zirkuläre DNA) mittels einer HBV spezifischen Realtime PCR quantifiziert.

Zur Kontrolle (K) wurden jeweils die Aktivitäten der bei 45 °C und bei 5°C gelagerten Säulen mit ermittelt.

Die Ergebnisse sind in Fig. 2 dargestellt. Es zeigt sich, dass grundsätzlich eine Reaktivierung durch die Behandlung der Silikamatrix mit allen erfindungsgemäßen wässrigen Lösungen erfolgt ist.

## Patentansprüche

1. Verfahren zur Erhöhung der Fähigkeit zur Anbindung und/oder Immobilisierung von Nukleinsäuren von Silikaoberflächen durch Behandeln mit wässriger Lösung und/oder Wasser, wobei das Verfahren zur Reaktivierung von Silikaoberflächen dient und die wässrige Lösung aus ≥ 99,5 Gew.-% Wasser besteht.

2. Verfahren nach Anspruch 1, wobei Silikaoberflächen für die Immobilisierung von Nukleinsäuren verwendet werden.

3. Verfahren gemäß einem der Ansprüche 1 oder 2, wobei die Behandlung für einen Zeitraum im Bereich von 15 -60 Minuten erfolgt.

4. Verfahren gemäß einem der Ansprüche 1 bis 3, wobei die Behandlung bei einer Temperatur von ≥ 20 ° bis 30 °C stattfindet.

5. Verfahren gemäß einem der Ansprüche 1 bis 4, wobei die zur Behandlung verwendete wässrige Lösung einen pH-Wert im Bereich von 2 bis 9,5 aufweist.

6. Verwendung einer wässrigen Lösung und/oder Wasser zur Erhöhung der Aktivität von Silikaoberflächen, wobei die Verwendung der Reaktivierung von Silikaoberflächen dient und die wässrige Lösung aus ≥ 99,5 Gew.-% Wasser besteht.

7. Verwendung nach Anspruch 6, **dadurch gekennzeichnet, dass** die wässrige Lösung zu 100 % aus Wasser besteht.

## Claims

1. Process for the enhancement of the ability of binding and/or immobilisation of nucleic acids of silica surfaces by treatment with an aqueous solution and/or water, wherein the process serves the reactivation of silica surfaces and the aqueous solution consists of ≥ 99.5 weight-% water.

2. Process according to claim 1, wherein the silica surfaces are applied in the immobilisation of nucleic acids.

3. Process according to any of the claims 1 or 2, wherein the treatment takes place during a time period within the range of 15 - 60 minutes.

4. Process according to any of the claims 1 to 3, wherein the treatment takes place at a temperature of ≥20 ° to 30 °C.

5. Process according to any of the claims 1 to 4, wherein the aqueous solution applied in the treatment has a pH value within the range of 2 to 9.5 .

6. Use of an aqueous solution and/or water for the enhancement of the activity of silica surfaces, wherein the use serves the reactivation of silica surfaces and the aqueous solution consists of ≥ 99.5 weight-% water.

7. Use according to claim 6, **characterized in that** the aqueous solution consists of 100 % water.

## Revendications

1. Procédé d'augmentation de la capacité de liaison et/ou d'immobilisation d'acides nucléiques de surfaces de silice par traitement avec une solution aqueuse et/ou de l'eau, dans lequel le procédé sert à la réactivation de surfaces de silice et la solution aqueuse est constituée de ≥ 99,5 % en poids d'eau.

2. Procédé selon la revendication 1, dans lequel des surfaces de silice sont utilisées pour l'immobilisation d'acides nucléiques.

3. Procédé selon l'une des revendications 1 ou 2, dans lequel le traitement s'effectue pendant une durée de l'ordre de 15 à 60 minutes.

4. Procédé selon l'une des revendications 1 à 3, dans lequel le traitement a lieu à une température de ≥ 20 à 30 °C.

5. Procédé selon l'une des revendications 1 à 4, dans lequel la solution aqueuse utilisée pour le traitement présente un pH de l'ordre de 2 à 9,5.

6. Utilisation d'une solution aqueuse et/ou d'eau pour augmenter l'activité de surfaces de silice, dans laquelle l'utilisation sert à la réactivation de surfaces de silice et la solution aqueuse est constituée de ≥ 99,5 % en poids d'eau.

7. Utilisation selon la revendication 6, **caractérisée en ce que** la solution aqueuse est constituée à 100 % d'eau.
